Europäisches Patentamt

European Patent Office

Office européen des brevets

(19)

(11) **EP 0 655 486 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.[6]: **C09C 1/00**, B41M 3/14, C09D 7/12, C08K 9/02, C09D 11/00, C03C 4/02, C04B 33/14, A61K 7/00

(21) Anmeldenummer: **94118092.9**

(22) Anmeldetag: **17.11.1994**

(54) **Magnetisierbare Glanzpigmente**

Magnetisable brilliant pigments

Pigments brillants magnétisables

(84) Benannte Vertragsstaaten:
**BE CH DE FR GB LI NL**

(30) Priorität: **25.11.1993 DE 4340141**

(43) Veröffentlichungstag der Anmeldung:
**31.05.1995 Patentblatt 1995/22**

(73) Patentinhaber: **BASF Aktiengesellschaft
67063 Ludwigshafen (DE)**

(72) Erfinder:
• **Schmid, Raimund, Dr.
D-67435 Neustadt (DE)**
• **Mronga, Norbert, Dr.
D-69221 Dossenheim (DE)**
• **Ochmann, Harald, Dr.
D-67125 Dannstadt-Schauernheim (DE)**

(56) Entgegenhaltungen:
**EP-A- 0 562 329          EP-A- 0 580 022
EP-A- 0 622 425          DE-A- 4 104 310**

**Beschreibung**

Die vorliegende Erfindung betrifft neue magnetisierbare Glanzpigmente auf der Basis von beschichteten, plättchenförmigen, nichtferromagnetischen, metallischen Substraten mit

A) einer ersten, ferromagnetischen Schicht, die $\gamma$-$Fe_2O_3$ enthält, und gewünschtenfalls

B1) einer weiteren, nicht ferromagnetischen, Metalloxid enthaltenden Schicht und/oder

B2) einer äußeren, passivierenden, phosphat-, chromat- und/oder vanadathaltigen Schicht.

Außerdem betrifft die Erfindung Mischungen von diesen Pigmenten und mit einer ferromagnetischen, $\gamma$-$Fe_2O_3$ enthaltenden Schicht und gewünschtenfalls einer zusätzlichen Metalloxidschicht und/oder einer äußeren, passivierenden, phosphat-, chromat- und/oder vanadathaltigen Schicht belegten silikatischen Plättchen, die bereits in einer ersten Schicht mit Metalloxid belegt sein können.

Weiterhin betrifft die Erfindung die Herstellung dieser Pigmente und Pigmentmischungen sowie ihre Verwendung zum Einfärben von Lacken, Druckfarben, Kunststoffen, Gläsern, keramischen Produkten und Zubereitungen der dekorativen Kosmetik.

Glanz- oder Effektpigmente werden in zunehmendem Maße in vielen Bereichen der Technik eingesetzt, beispielsweise in Automobillacken, in der dekorativen Beschichtung, der Kunststoffeinfärbung, in Anstrich-, Druck-, insbesondere Sicherheitsdruckfarben sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Voraussetzung für die gerichtete Reflexion ist die Ausrichtung der plättchenförmigen Pigmente im Anwendungsmedium. Bei Lacken und Druckfarben erfolgt diese Ausrichtung in der Regel durch Fließvorgänge innerhalb des Bindemittels während der Applikation. Schrumpfungsprozesse, die beispielsweise beim Trocknen von dünnen Lackfilmen auftreten, verbessern die gleichmäßige Ausrichtung der Pigmentplättchen noch zusätzlich.

Jedoch können durch unterschiedliche Pigmentorientierungen in verschiedenen Bereichen des Anwendungsmediums auch besondere optische Effekte erreicht werden. So sind beispielsweise bei der Einfärbung von Kunststoffen im Spritzgußverfahren Fließlinien zu beobachten, die durch unterschiedlich orientierte Pigmentplättchen sichtbar gemacht werden.

Interessante dreidimensionale optische Effekte ergeben sich z.B. bei Verwendung magnetisierbarer Pigmentplättchen durch Einwirkung von Magnetfeldern während oder nach der Applikation im noch flüssigen Anwendungsmedium. Magnetisierbare Glanzpigmente sind daher für eine Reihe von Anwendungen wie den Sicherheitsdruck, als magnetisch lesbare Codes oder für künstlerische und dekorative Zwecke von besonderem Interesse.

Als magnetisierbare Glanzpigmente sind prinzipiell solche Pigmente geeignet, bei denen plättchenförmige, ferromagnetische Substratteilchen z.B. aus Eisen oder Nickel, die unbeschichtet oder mit Metalloxid beschichtet sein können, vorliegen oder bei denen ein nichtferromagnetisches, plättchenförmiges Substrat mit magnetisierbaren Schichten belegt ist.

In den DE-A-23 13 331 und 39 38 055 werden magnetisierbare Glanzpigmente auf der Basis von mit Magnetit beschichtetem Glimmer genannt. Aus der US-A-3 536 520 und der JP-A-161 055/1982 sind mit Nickel beschichtete Glimmer bekannt.

Magnetisierbare Glanzpigmente mit plättchenförmigem, nichtferromagnetischem, metallischem Substrat werden lediglich in der älteren, nicht vorveröffentlichten DE-A-42 17 511 beschrieben. Hier ist jedoch das metallische Substrat, insbesondere Aluminium, zunächst mit einer ersten, nicht magnetisierbaren Metalloxidschicht belegt, auf die dann erst die magnetisierbare Schicht aus Magnetit, Eisen, Cobalt oder Nickel und gewünschtenfalls eine weitere, oxidische Deckschicht folgen.

Bei den magnetisierbaren Glanzpigmenten auf Basis beschichteter Glimmer ist das niedrige Deckvermögen aufgrund des transparenten Substratmaterials von Nachteil. Zwar erhöhen zusätzliche Magnetit-, Nickel- oder Cobaltschichten das Deckvermögen dieser Pigmente, jedoch lassen metallähnlicher Glanz und Farbstärke mit zunehmender Dicke der ferromagnetischen Schicht nach.

Bei der Verwendung von ferromagnetischen Substraten wie Nickel- oder Eisenflakes zur Herstellung von magnetisierbaren Glanzpigmenten besteht das Problem der mangelnden Verfügbarkeit, so daß eine wirtschaftliche Herstellung erschwert wird. Zusätzlich wird die Verarbeitung dieser Pigmente durch ihr hohes spezifisches Gewicht erschwert.

Der Erfindung lag daher die Aufgabe zugrunde, neue magnetisierbare Glanzpigmente ohne die genannten Nachteile und mit vorteilhaften Anwendungseigenschaften bereitzustellen.

Demgemäß wurden die eingangs definierten magnetisierbaren Glanzpigmente und ihre Mischungen mit magnetisierbar beschichteten silikatischen Plättchen gefunden.

Außerdem wurde ein Verfahren zur Herstellung dieser Pigmente gefunden, welches dadurch gekennzeichnet ist, daß man das metallische Substrat in einer Wirbelschicht

a1) durch Gasphasenzersetzung von Eisencarbonyl in Gegenwart von Wasserdampf und/oder Sauerstoff zunächst mit einer im wesentlichen Magnetit enthaltenden Schicht belegt und diese Schicht dann durch Erhitzen des Pigments in einer oxidierenden Atmosphäre in eine ferromagnetische, $\gamma$-$Fe_2O_3$ enthaltende Schicht überführt oder

a2) durch Gasphasenzersetzung von Eisencarbonyl in Gegenwart von Sauerstoff und/oder Wasserdampf zunächst mit einer im wesentlichen $\alpha$-$Fe_2O_3$ enthaltenden Schicht belegt, diese Schicht durch Erhitzen in einer reduzierenden Atmosphäre in eine eisen(II)haltige Schicht und die reduzierte Schicht dann durch Erhitzen in einer oxidierenden Atmosphäre in eine ferromagnetische, $\gamma$-$Fe_2O_3$ enthaltende Schicht überführt und gewünschtenfalls

b1) anschließend durch Gasphasenzersetzung flüchtiger Metallverbindungen in Gegenwart von Sauerstoff und/ oder Wasserdampf mit einer weiteren Schicht aus nichtferromagnetischem Metalloxid und/oder

b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

Weiterhin wurde ein Verfahren zur Herstellung der Glanzpigmentmischungen gefunden, welches dadurch gekennzeichnet ist, daß man das metallische Substrat und die unbeschichteten oder bereits metalloxidbeschichteten silikatischen Plättchen gemeinsam in einer Wirbelschicht durch Gasphasenzersetzung gemäß Schritt a1) oder a2) und gegebenenfalls b1) und/oder b2) mit den gewünschten Schichten belegt.

Nicht zuletzt wurde ein Verfahren zur Einfärbung von Lacken, Druckfarben, Kunststoffen, Gläsern, keramischen Produkten und Zubereitungen der dekorativen Kosmetik gefunden, welches dadurch gekennzeichnet ist, daß man hierfür die erfindungsgemäßen Glanzpigmente oder Glanzpigmentmischungen verwendet.

Außerdem wurde eine besondere Ausführungsform dieses Verfahrens gefunden, welche dadurch gekennzeichnet ist, daß man die Glanzpigmente während oder nach der Applikation im noch flüssigen Anwendungsmedium einem Magnetfeld aussetzt.

Für die erfindungsgemäßen Pigmente sind als Substrat alle nichtferromagnetischen, für Metalleffektpigmente bekannten Metalle und Legierungen in Plättchenform geeignet. Z.B. kommen neben Kupfer und seinen Legierungen wie Messing und Bronzen vor allem Aluminium und seine Legierungen wie Aluminiumbronze in Betracht.

Bevorzugt sind Aluminiumflakes, die in einfacher Weise durch Herausstanzen aus Aluminiumfolie oder nach bekannten Verdüsungs- und Mahltechniken herzustellen sind.

Die Größe der Substratteilchen ist an sich nicht kritisch und kann auf den jeweiligen Anwendungsbereich abgestimmt werden. In der Regel haben die Teilchen mittlere größte Durchmesser von etwa 1 bis 200 µm, insbesondere etwa 5 bis 100 µm, und Dicken von etwa 0,1 bis 5 µm, insbesondere um etwa 0,5 µm.

Es können handelsübliche Produkte eingesetzt werden. Jedoch sollte die Oberfläche der Aluminiumteilchen weitgehend frei von Fetten oder anderen Belegmitteln sein. Diese Substanzen können zum Teil durch Lösungsmittelbehandlung oder besser, wie in der älteren, nicht vorveröffentlichten DE-A-42 23 384 beschrieben, durch oxidative Behandlung entfernt werden.

Bei den erfindungsgemäßen magnetisierbaren Glanzpigmenten ist das Substrat mit einer ferromagnetischen Schicht (A), die $\gamma$-$Fe_2O_3$ (Maghemit) enthält, belegt. Die Schicht (A) kann vorteilhaft durch Gasphasenzersetzung von Eisencarbonyl in Gegenwart von Wasserdampf und/oder Sauerstoff im wesentlichen zu Magnetit und dessen nachfolgende Oxidation zu $\gamma$-$Fe_2O_3$ auf das Substrat aufgebracht werden. Dabei werden glatte, homogene und das Substrat gleichmäßig umhüllende Schichten erhalten.

Ein alternativer Herstellungsweg besteht darin, durch oxidative Gasphasenzersetzung von Eisencarbonyl zunächst eine im wesentlichen aus $\alpha$-$Fe_2O_3$ bestehende Schicht aufzubringen, diese durch Erhitzen in einer reduzierenden Atmosphäre in eine eisen(II)haltige Schicht umzuwandeln und die reduzierte Schicht zu der Schicht (A) zu oxidieren.

Die Dicke der Schicht (A) ist an sich nicht kritisch und beträgt im allgemeinen 1 bis 500 nm, bevorzugt 5 bis 200 nm.

Aufgrund der roten Eigenfarbe von $\gamma$-$Fe_2O_3$ sind die erfindungsgemäßen Pigmente insbesondere für den roten bis gelben Farbtonbereich von Interesse. Goldene Farbtöne werden bereits bei Schichtdicken (A) von im allgemeinen 10 bis 40 nm (das entspricht einem Maghemitgehalt von etwa 15 bis 20 Gew.-%) erhalten, brillante Rottöne ergeben sich vor allem bei Schichtdicken (A) von in der Regel 80 bis 130 nm (Maghemitgehalt von etwa 45 bis 55 Gew.-%, bezogen auf das beschichtete Pigment).

Da die Herstellung insbesondere der roten Pigmente aufgrund der leichten Entzündbarkeit des Reaktionsgemisches durch ein Einsetzen der Thermitreaktion problematisch ist, ist es von Vorteil, Mischungen von Aluminiumflakes und silikatischen Plättchen zu beschichten, wodurch eine Zündung wirksam vermieden werden kann (s. auch DE-A-42 09 242).

Als silikatische Substrate kommen hierfür insbesondere helle bzw. weiße Glimmer in Betracht, wobei Schuppen von vorzugsweise naß vermahlenem Muskovit besonders bevorzugt sind. Selbstverständlich sind auch andere natürliche Glimmer wie Phlogopit und Biotit, künstliche Glimmer, Talk- und Glasschuppen geeignet.

Die zum Einsatz kommenden silikatischen Substratteilchen können in einer ersten Schicht bereits mit Metalloxiden wie Chrom-, Zinn-, Zink-, Aluminium-, Siliciumoxid, Bismutoxychlorid, bevorzugt Eisen(III)oxid und Zirkondioxid, besonders bevorzugt Titandioxid belegt sein. Diese Pigmente sind allgemein bekannt und auch unter den Bezeichnungen Iriodin® (Merck, Darmstadt), Flonac® (Kemira Oy, Pori) oder Mearlin® (Mearlin Corp., New York) im Handel.

Die Zusammensetzung der erfindungsgemäßen Glanzpigmentmischungen aus magnetisierbaren, metallischen Glanzpigmenten (I) und magnetisierbaren, silikatischen Glanzpigmenten (II) ist an sich nicht kritisch, hängt jedoch von der für die Pigmentmischung gewünschten Koloristik ab. Weiterhin sollte jede der beiden Komponenten zu mindestens 5 Gew.-% enthalten sein, um einerseits das Deckvermögen, andererseits aber auch die Sicherheit zu gewährleisten.

Vorteilhafte magnetisierbare Rotpigmente mit metallischem Glanz und gutem Deckvermögen ergeben sich beispielsweise bei der Belegung eines Aluminium/Muskovit-Gemisches mit einem Aluminiumgehalt von 5 bis 50 Gew.-% mit in der Regel 20 bis 55 Gew.-% Maghemit, bezogen auf das Substrat.

Zum Schutz der Schicht (A) gegen Umwelteinflüsse können die erfindungsgemäßen Glanzpigmente mit einer zweiten, nichtferromagnetischen, Metalloxid enthaltenden Schicht belegt werden. Besonders geeignet sind hierfür farblose Metalloxide wie Siliciumdioxid, Zirkondioxid, Titandioxid und Aluminiumoxid, denkbar sind jedoch auch farbige Metalloxide wie $\alpha$-Fe$_2$O$_3$.

Die Dicke der Schicht (B1) ist nicht kritisch und beträgt im allgemeinen 1 bis 500 nm, vorzugsweise 5 bis 200 nm.

Um die Stabilität der erfindungsgemäßen Glanzpigmente in wäßrigen Systemen zu erhöhen, kann auf die mit einer Schicht (A) und gegebenenfalls auch mit einer Schicht (B1) belegten Pigmente durch Gasphasenpassivierung noch eine zusätzliche, phosphat-, chromat- und/oder vanadathaltige Schicht (B2) aufgebracht werden, wobei eine phosphathaltige Beschichtung bevorzugt ist. Diese Passivierung empfiehlt sich insbesondere bei Aluminiumpigmenten, die in wäßrigen Systemen, beispielsweise Wasserbasislacken, eingesetzt werden sollen.

Bei dem erfindungsgemäßen Verfahren zur Herstellung der magnetisierbaren Glanzpigmente werden die einzelnen Beschichtungen in der Gasphase jeweils durch Zersetzung geeigneter Ausgangsverbindungen in Gegenwart der zu belegenden Substratteilchen vorgenommen. Je nach Art der Beschichtung sind dabei unterschiedliche Ausgangsverbindungen und Reaktionsbedingungen erforderlich.

Die Beschichtung kann vorteilhaft in einem beheizbaren Wirbelschichtreaktor, wie er beispielsweise in der EP-A-45 581 beschrieben ist, vorgenommen werden. Die Substratteilchen (die Metallflakes oder ihre Gemische mit silikatischen Plättchen) werden dabei zunächst mit einem Wirbelgas fluidisiert und auf die für die Zersetzung der jeweiligen Metallverbindung erforderliche Temperatur von in der Regel 70 bis 350°C erhitzt. Die verdampften Metallverbindungen und die gegebenenfalls zur Zersetzung benötigten Gase werden dann über getrennte Düsen eingetragen. Dies geschieht zweckmäßigerweise mit Hilfe eines inerten Trägergases wie Argon und besonders Stickstoff, das über entsprechende, dem Reaktor vorgeschaltete Verdampfervorlagen mit der jeweiligen Metallverbindung oder Wasser geleitet wird oder dem das Reaktionsgas (Luft oder Sauerstoff) zugemischt wird.

Um das Substrat gleichmäßig und vollständig umhüllende, homogene Schichten zu erhalten, sollte die Gasmenge der Metallverbindung im allgemeinen nicht mehr als 5 Vol.-%, vorzugsweise nicht mehr als 2 Vol.-% der Gesamtgasmenge im Reaktor betragen. Das gilt sowohl für Schritt a) als auch für Schritt b) des erfindungsgemäßen Verfahrens.

Die Belegung der Substratteilchen mit der ferromagnetischen, $\gamma$-Fe$_2$O$_3$ enthaltenden Schicht (A) kann auf verschiedene Weise erfolgen.

Bei der Variante a1) wird zunächst durch gezielte Oxidation von Eisencarbonyl, insbesondere Eisenpentacarbonyl, eine im wesentlichen aus Magnetit bestehende Schicht aufgebracht, die anschließend durch Oxidation in die Schicht (A) überführt wird.

Die Oxidation des Eisencarbonyls kann dabei durch Wasserdampf und/oder Sauerstoff erfolgen.

Bevorzugt ist die Umsetzung mit Wasserdampf bei in der Regel 170 bis 350°C, bevorzugt 180 bis 250°C, die mit der folgenden Reaktionsgleichung beschrieben werden kann:

$$3\text{Fe(CO)}_5 + 4\text{H}_2\text{O} \rightarrow \text{Fe}_3\text{O}_4 + 4\text{H}_2 + 15\text{CO}$$

Das Molverhältnis von Wasser zu Eisencarbonyl sollte dabei mindestens dem stöchiometrischen Verhältnis von 1,33 : 1 entsprechen. Da der gebildete Magnetit unter den Beschichtungsbedingungen von Wasserdampf nicht angegriffen wird, ist der Wasserdampfgehalt im Wirbelgas nicht kritisch. Man setzt daher in der Regel das 10 bis 100fache der stöchiometrisch erforderlichen Wassermenge ein.

Die Oxidation des Eisencarbonyls kann auch direkt mit Sauerstoff bzw. Luft vorgenommen werden. Hierbei müssen Sauerstoff und Carbonyl jedoch möglichst genau im stöchiometrischen Verhältnis (etwa 1,33 : 1) in den Reaktionsraum eingeführt werden, um eine Weiteroxidation zu $\alpha$-$Fe_2O_3$ zu vermeiden. Geeignete Reaktionstemperaturen sind hier in der Regel 170 bis 350°C.

Nach abgeschlossener Belegung mit der magnetithaltigen Schicht kühlt man den Reaktor zweckmäßigerweise zuerst auf Raumtemperatur ab und gibt dann den Wirbelgasen zur Passivierung eventuell vorhandener pyrophorer Anteile in der aufgebrachten Schicht etwas Luft zu.

Die folgende Oxidation des Magnetits zu $\gamma$-$Fe_2O_3$ kann man sowohl im Wirbelschichtreaktor als auch in einer anderen beheizbaren Apparatur, z.B. einem Kammerofen, durchführen. In beiden Fällen kann zur Oxidation einfach Luft verwendet werden. Selbstverständlich sind auch andere Sauerstoff/Inertgas-Gemische geeignet.

Das Pigment wird dabei zweckmäßigerweise langsam auf die gewünschte Oxidationstemperatur erhitzt. Die Aufheizgeschwindigkeit hängt dabei von dem Eisenoxidgehalt des Pigments ab, insbesondere bei hohen Gehalten (etwa 35 bis 55 Gew.-%) sollte eine kleine Aufheizrate gewählt werden. Übliche Aufheizraten sind etwa 10 bis 100°C/h.

Die Oxidationstemperatur beträgt im allgemeinen 100 bis 600°C, bevorzugt 180 bis 400°C und besonders bevorzugt 200 bis 350°C.

Die Oxidation ist üblicherweise in 8 bis 24 h beendet, dicke Schichten erfordern dabei die längeren Oxidationszeiten.

Mit steigender Oxidationstemperatur und Oxidationsdauer enthält die gebildete Schicht (A) neben $\gamma$-$Fe_2O_3$ in zunehmendem Maße auch $\alpha$-$Fe_2O_3$. Aber auch Pigmente mit einem geringeren Anteil der Schicht (A) an $\gamma$-$Fe_2O_3$ sind noch magnetisch ausrichtbar.

Bei der Variante a2) zur Aufbringung der ferromagnetischen Schicht (A) wird zunächst durch Oxidation von Eisencarbonyl, vor allem Eisenpentacarbonyl, eine im wesentlichen aus $\alpha$-$Fe_2O_3$ bestehende Schicht aufgebracht, die dann durch Reduktion in eine eisen(II)haltige Schicht überführt wird. Diese Schicht wird anschließend durch Oxidation in die $\gamma$-$Fe_2O_3$ enthaltende Schicht (A) umgewandelt.

Die Oxidation des Eisencarbonyls erfolgt vorteilhaft, wie in der EP-A-33 457 beschrieben, durch Sauerstoff bzw. Luft oder andere Sauerstoff/Inertgas-Gemische, wobei Wasserdampf an- oder abwesend sein kann. Im Gegensatz zur gezielten Herstellung von Magnetit $Fe_3O_4$ besteht hier kein Problem einer möglichen Überoxidation.

Die erhaltene, im wesentlichen aus $\alpha$-$Fe_2O_3$ bestehende Schicht wird dann durch Erhitzen in einer reduzierenden Atmosphäre, also vorteilhaft in Gegenwart von z.B. Kohlenmonoxid oder besonders Wasserstoff, aber auch deren Mischungen, zu der eisen(II)haltigen Schicht, die als wesentliche Bestandteile Eisen(II)oxid, Magnetit und Eisen enthält, umgewandelt.

Günstige Reduktionstemperaturen liegen dabei im allgemeinen bei 200 bis 600°C, bevorzugt 200 bis 400°C.

Die Aufheizrate beträgt üblicherweise etwa 10 bis 50°C/h. Die Reduktion ist in der Regel in 8 bis 24 h beendet.

Wie bei der Herstellung der magnetithaltigen Schicht beschrieben, wird der Reaktor anschließend zweckmäßigerweise zuerst auf Raumtemperatur abgekühlt, dann wird den Wirbelgasen zur Passivierung eventuell vorhandener pyrophorer Anteile in der reduzierten Schicht etwas Luft zugemischt.

Die anschließende Oxidation der eisen(II)haltigen Schicht zur Schicht (A) kann analog der bei der Variante a1) beschriebenen Vorgehensweise vorgenommen werden.

Soll nach der ferromagnetischen Schicht (A) noch eine Metalloxidschicht (B1) und/oder eine passivierende Schicht (B2) aufgebracht werden, so muß das Produkt bei Durchführung der Oxidation im Wirbelschichtreaktor nicht zwischenisoliert werden, vielmehr kann die weitere Schicht vorteilhaft direkt anschließend nach Temperaturerniedrigung und Austausch des Wirbelgases in demselben Reaktor vorgenommen werden. Wird die Oxidation in einem Kammerofen vorgenommen, so wird das Produkt natürlich erst wieder in einen Wirbelschichtreaktor überführt.

Zur Abscheidung einer weiteren Schicht (B1) aus nichtferromagnetischen Metalloxiden werden als flüchtige Metallverbindungen bevorzugt die Carbonyle, die Alkoholate, sowohl aromatische wie Phenolate und Benzylalkoholate als auch aliphatische, vor allem $C_1$-$C_4$-Alkoholate, wie n-, iso- und tert.-Butanolate, bevorzugt Methanolate und Ethanolate und besonders bevorzugt n- und iso-Propanolate und die Halogenide eingesetzt.

Beispiele für bevorzugte Metallverbindungen sind Titan-, Zirkontetra-n- und -isopropanolat, Siliciumtetraethanolat und Aluminiumclorid sowie Eisenpentacarbonyl.

Die Hydrolyse der Alkoholate mit Wasserdampf erfolgt vorzugsweise in Abwesenheit von Sauerstoff. Dabei muß mindestens die stöchiometrisch zur Bildung des gewünschten Oxids erforderliche Menge Wasserdampf zugeführt werden, man kann jedoch auch mit einem geringen Überschuß arbeiten. Bei dieser Belegung dient vorzugsweise ein inertes Gas wie Stickstoff als Wirbelgas. Geeignete Hydrolysetemperaturen betragen im allgemeinen 100 bis 350°C, bevorzugt 150 bis 250°C.

Insbesondere für den Einsatz in wäßrigen Systemen empfiehlt sich die Passivierung der mit einer Schicht (A) und gegebenenfalls auch einer Schicht (B1) belegten Pigmente durch Aufbringen einer zusätzlichen, phosphat-, chromat- und/oder vanadathaltigen Schicht (B2), wobei phosphathaltige Schichten (B2) besonders bevorzugt sind.

Die Passivierung kann, wie in der älteren, nicht vorveröffentlichten DE-A-42 36 332 beschrieben, vorteilhaft durch Gasphasenzersetzung von verdampfbaren Phosphor-, Chrom- und/oder Vanadiumverbindungen in Gegenwart von Wasserdampf erfolgen.

Sehr gute Wasserbeständigkeiten ergeben sich bei der hydrolytischen Zersetzung von verdampften phosphorhaltigen Verbindungen, die sich insbesondere von den Sauerstoffsäuren des Phosphors ableiten.

Unter diesen sind die Tri- und Di-($C_1$-$C_4$-alkyl)ester der Phosphorsäure und die Tri- und Di-($C_1$-$C_2$-alkyl)ester der phosphorigen Säure besonders bevorzugt. Als Beispiele seien die Ester $(RO)_3PO$ (R = Methyl, Ethyl, Propyl, iso-Propyl, Butyl oder iso-Butyl) und $(RO)_2PO(OH)$ (R = Methyl, Ethyl) sowie $(RO)_3P$ und $(RO)_2P(OH)$ (R = Methyl, Ethyl) genannt.

Ebenfalls sehr gut geeignet sind die Phosphoroxyhalogenide $POX_3$ mit X = gleiche oder verschiedene Halogene. Bevorzugte Beispiele sind hier: $POCl_3$, $POBrCl_2$, $POBr_2Cl$ und $POBr_3$.

Weiterhin eignen sich auch verdampfbare Oxychloride anderer Metalle, insbesondere Chromylchlorid ($CrO_2Cl_2$) und auch Vanadiumoxidchlorid ($VOCl_3$).

Bei der Gasphasenpassivierung geht man üblicherweise so vor, daß man die Substratteilchen mit einem inerten Gas wie Stickstoff fluidisiert und einen Teil des Wirbelgases über eine dem Reaktor vorgeschaltete Verdampfervorlage mit den entsprechenden Phosphor-, Chrom- und/oder Vanadiumverbindungen und einen anderen Teil des Wirbelgases über ein mit Wasser beschicktes Verdampfergefäß mit Wasserdampf belädt.

Dabei sollte die Gasmenge der Phosphor-, Chrom- und/oder Vanadiumverbindung in der Regel nicht mehr als 3 Vol.-%, bevorzugt 0,001 bis 0,5 Vol.-% der Gesamtgasmenge im Reaktor betragen.

Die Menge des zudosierten Wasserdampfs hängt von der Konzentration der passivierenden Spezies ab und sollte mindestens der stöchiometrisch erforderlichen Menge entsprechen; bevorzugt ist die 10 bis 100 fache molare Menge an Wasserdampf.

In der Regel wird die Passivierung bei 100 bis 350°C vorgenommen. Bei einer Phosphatierung ausgehend von Phosphoroxychlorid beispielsweise beträgt die Reaktionstemperatur bevorzugt 130 bis 220°C.

Wie üblich können die mit einer passivierenden Schicht belegten Pigmente nach Abkühlung dem Reaktor entnommen werden.

Mit Hilfe des erfindungsgemäßen Verfahrens können die neuen Glanzpigmente und Glanzpigmentmischungen in einfacher und reproduzierbarer Weise gezielt hergestellt werden. Die erhaltenen Pigmente zeichnen sich durch hohe Qualität der Beschichtung, d.h. durch homogene, gleichmäßige und die Substratteilchen filmartig umhüllende Schichten, aus.

Die erfindungsgemäßen magnetisierbaren Glanzpigmente und Glanzpigmentmischungen eignen sich vorteilhaft für viele Zwecke wie zur Einfärbung von Lacken, Druckfarben, Kunststoffen, Gläsern, keramischen Produkten und Zubereitungen der dekorativen Kosmetik. Sie zeigen hohen Glanz, attraktive Farben und gutes Deckvermögen und sind aufgrund ihrer ferromagnetischen Eigenschaften für besondere Anwendungen, wie die Erzeugung von dreidimensionalen optischen Effekten durch die Einwirkung von Magnetfeldern während oder nach der Applikation im noch flüssigen Anwendungsmedium geeignet. Beispielsweise seien der Sicherheits- und Wertschriftdruck genannt; Hologramme auf Scheckkarten können z.B. durch kostengünstigere, ähnlich wirkende, durch Magnetfelder ausgerichtete Glanzpigmente ersetzt werden.

Beispiele

Herstellung von erfindungsgemäßen magnetisierbaren Glanzpigmenten und Glanzpigmentmischungen

Die in den Beispielen beschriebenen Beschichtungen von Substratteilchen wurden jeweils in einem von außen beheizbaren Wirbelschichtreaktor aus Glas mit einem Durchmesser von 8 cm und einer Höhe von 80 cm mit Glasfrittenboden und oben eingehängten, mit einem Stickstoff-Jet abreinigenden Filterstrümpfen und zwei seitlich oberhalb des Frittenbodens eingebrachten Düsen zur Gaseinleitung durchgeführt.

Zur Beurteilung der magnetischen Eigenschaften der erhaltenen Pigmente wurden die Sättigungsmagnetisierung $M_s$ [$nTm^3/g$], die Remanenz $M_r$ [$nTm^3/g$] und die Koerzitivfeldstärke $H_c$ [kA/m] mit einem Schwingmagnetometer gemessen.

Beispiel 1

200 g eines handelsüblichen, feinteiligen Aluminiumpigments (BET-Oberfläche 4,5 $m^2/g$, mittlerer Teilchendurchmesser 20 µm) wurden im Wirbelschichtreaktor unter Verwirbelung mit insgesamt 800 l/h Stickstoff auf 190°C erhitzt. Dabei wurde eine Hälfte des Stickstoffs über eine auf 60°C erwärmte Vorlage mit Wasser und die andere Hälfte über eine auf Raumtemperatur gehaltene Vorlage mit Eisenpentacarbonyl geleitet. Innerhalb von etwa 8 h wurden so 60,7 g Eisenpentacarbonyl zugeführt.

Beim anschließenden Abkühlen des Reaktors wurde dem Wirbelgas zur Passivierung pyrophorer Anteile der gebildeten magnetithaltigen Schicht etwas Luft zugesetzt.

Das erhaltene, starken metallischen Glanz zeigende Pigment hatte einen Eisengehalt von 5,5 Gew.-%.

Zur Überführung der Magnetitschicht in eine $\gamma$-Fe$_2$O$_3$ enthaltende Schicht wurde das Pigment anschließend auf einem Keramikeinsatz in einem Kammerofen innerhalb von 2,5 h auf 250°C erhitzt und 12 h bei dieser Temperatur gehalten.

Nach dem Abkühlen wurde ein stark glänzendes, messingfarbenes Pigment, dessen Magnetwerte in Tabelle 1 aufgeführt sind, erhalten (Probe 1).

Eine weitere Probe des magnetitbeschichteten Pigments wurde innerhalb von 4 Stunden auf 400°C erhitzt und 15 h bei dieser Temperatur getempert.

Dabei wurde ein stark glänzendes, goldfarbenes Pigment erhalten (Probe 2), dessen Magnetwerte ebenfalls in Tabelle 1 aufgeführt sind.

Tabelle 1

| | Temp.[°C] | Farbton | M$_s$[nTm$^3$/g] | M$_r$[nTm$^3$/g] | H$_c$[kA/m] |
|---|---|---|---|---|---|
| vor Ox. | - | silber | 3,5 | 0,3 | 8,5 |
| Probe 1 | 250 | messing | 4,4 | 0,1 | 1,4 |
| Probe 2 | 400 | gold | 3,1 | 0,1 | 0,8 |

Bei der Applikation in Lack orientierten sich die Pigmentplättchen aller Proben bei der Einwirkung eines Magnetfelds im noch feuchten Lackfilm entlang der Feldlinien. Im getrockneten Lack ergaben sich auf diese Weise dreidimensionale Strukturen.

Beispiel 2

Eine Mischung aus 100 g handelsüblichem, feinteiligem Aluminiumpigment (BET-Oberfläche 4,5 m$^2$/g, mittlerer Teilchendurchmesser 20 µm) und 100 g eines TiO$_2$-beschichteten Glimmerpigments (Irodin® 9103 Sterling Silber WR, Merck) wurde im Wirbelschichtreaktor unter Verwirbelung mit insgesamt 800 l/h Stickstoff auf 190°C erhitzt. Dabei wurde eine Hälfte des Stickstoffs über eine auf 60°C erwärmte Vorlage mit Wasser und die andere Hälfte über eine auf Raumtemperatur gehaltene Vorlage mit Eisencarbonyl geleitet. Innerhalb von etwa 16 h wurden so 110 g Eisencarbonyl zugeführt.

Beim anschließenden Abkühlen des Reaktors wurde dem Wirbelgas zur Passivierung pyrophorer Anteile der gebildeten magnetithaltigen Schicht etwas Luft zugesetzt.

Das so hergestellte metallisch glänzende Pigment hatte einen Eisengehalt von 9 Gew.-%, war im Vergleich zum magnetitbeschichteten Pigment aus Beispiel 1 dunkler und zeigte einen schwachen Braunton (Magnetwerte in Tabelle 2 vor Oxidation).

Mehrere Proben des magnetitbeschichteten Pigmentgemischs wurden in einem Kammerofen mit einer Aufheizrate von 50°C/h auf Temperaturen zwischen 250 und 400°C erhitzt und 15 h bei den jeweiligen Temperaturen getempert.

Tabelle 2 gibt eine Übersicht über die Ergebnisse dieser Versuche.

Tabelle 2

| | Temp.[°C] | Farbton | M$_s$[nTm$^3$/g] | M$_r$[nTm$^3$/g] | H$_c$[kA/m] |
|---|---|---|---|---|---|
| vor Ox. | - | dunkel | 17,9 | 4,3 | 39,1 |
| Probe 1 | 250 | grüngold | 15,2 | 3,5 | 25,4 |
| Probe 2 | 300 | gold | 14,5 | 3,4 | 25,0 |
| Probe 3 | 350 | gold | 13,5 | 3,0 | 24,9 |
| Probe 4 | 400 | rotgold | 3,6 | 0,2 | 21,3 |

Bei der Applikation in Lack orientierten sich die Pigmentplättchen aller Proben bei der Einwirkung eines Magnetfelds im noch feuchten Lackfilm entlang der Feldlinien. Im getrockneten Lack ergaben sich auf diese Weise dreidimensionale Strukturen.

**Patentansprüche**

1. Magnetisierbare Glanzpigmente auf der Basis von beschichteten, plättchenförmigen, nichtferromagnetischen, metallischen Substraten mit

   A) einer ersten, ferromagnetischen Schicht, die $\gamma$-$Fe_2O_3$ enthält, und gewünschtenfalls

   B1) einer weiteren, nicht ferromagnetischen, Metalloxid enthaltenden Schicht und/oder

   B2) einer äußeren, passivierenden, phosphat-, chromat- und/oder vanadathaltigen Schicht.

2. Glanzpigmente nach Anspruch 1, bei denen das nichtferromagnetische, metallische Substrat im wesentlichen aus Aluminium besteht.

3. Magnetisierbare Glanzpigmentmischungen aus

   I) den Glanzpigmenten gemäß Anspruch 1 oder 2 und

   II) mit einer ferromagnetischen, $\gamma$-$Fe_2O_3$ enthaltenden Schicht und gewünschtenfalls einer zusätzlichen Metalloxidschicht und/oder einer äußeren, passivierenden, phosphat-, chromat- und/oder vanadathaltigen Schicht belegten silikatischen Plättchen, die bereits in einer ersten Schicht mit Metalloxid belegt sein können,

   als wesentlichen Komponenten.

4. Verfahren zur Herstellung der Glanzpigmente gemäß Anspruch 1 oder 2, dadurch gekennzeichnet, daß man das metallische Substrat in einer Wirbelschicht

   a1) durch Gasphasenzersetzung von Eisencarbonyl in Gegenwart von Wasserdampf und/oder Sauerstoff zunächst mit einer im wesentlichen Magnetit enthaltenden Schicht belegt und diese Schicht dann durch Erhitzen in einer oxidierenden Atmosphäre in eine ferromagnetische $\gamma$-$Fe_2O_3$ enthaltende Schicht überführt oder

   a2) durch Gasphasenzersetzung von Eisencarbonyl in Gegenwart von Sauerstoff und/oder Wasserdampf zunächst mit einer im wesentlichen $\alpha$-$Fe_2O_3$ enthaltenden Schicht belegt, diese Schicht durch Erhitzen in einer reduzierenden Atmosphäre in eine eisen(II)haltige Schicht und die reduzierte Schicht dann durch Erhitzen in einer oxidierenden Atmosphäre in eine ferromagnetische, $\gamma$-$Fe_2O_3$ enthaltende Schicht überführt und gewünschtenfalls

   b1) anschließend durch Gasphasenzersetzung flüchtiger Metallverbindungen in Gegenwart von Sauerstoff und/oder Wasserdampf mit einer weiteren Schicht aus nichtferromagnetischem Metalloxid und/oder

   b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

5. Verfahren zur Herstellung der Glanzpigmentmischungen gemäß Anspruch 3, dadurch gekennzeichnet, daß man das metallische Substrat und die unbeschichteten oder bereits metalloxidbeschichteten silikatischen Plättchen gemeinsam in einer Wirbelschicht

   a1) durch Gasphasenzersetzung von Eisencarbonyl in Gegenwart von Wasserdampf und/oder Sauerstoff zunächst mit einer im wesentlichen Magnetit enthaltenden Schicht belegt und diese Schicht dann durch Erhitzen der Pigmentmischung in einer oxidierenden Atmosphäre in eine ferromagnetische, $\gamma$-$Fe_2O_3$ enthaltende Schicht überführt oder

   a2) durch Gasphasenzersetzung von Eisencarbonyl in Gegenwart von Sauerstoff und/oder Wasserdampf zunächst mit einer im wesentlichen $\alpha$-$Fe_2O_3$ enthaltenden Schicht belegt, diese Schicht durch Erhitzen in einer reduzierenden Atmosphäre in eine eisen(II)haltige Schicht und die reduzierte Schicht dann durch Erhitzen in einer oxidierenden Atmosphäre in eine ferromagnetische, $\gamma$-$Fe_2O_3$ enthaltende Schicht überführt und gewünschtenfalls

b1) anschließend durch Gasphasenzersetzung flüchtiger Metallverbindungen in Gegenwart von Sauerstoff und/oder Wasserdampf mit einer weiteren nichtferromagnetischen Schicht aus Metalloxid und/oder

b2) durch Gasphasenzersetzung von verdampfbaren Phosphor-, Chrom- und/oder Vanadiumverbindungen in Gegenwart von Wasserdampf mit einer zusätzlichen, passivierenden, phosphat-, chromat- und/oder vanadathaltigen Schicht belegt.

6. Verfahren zur Einfärbung von Lacken, Druckfarben, Kunststoffen, Gläsern, keramischen Produkten und Zubereitungen der dekorativen Kosmetik, dadurch gekennzeichnet, daß man hierfür die Glanzpigmente gemäß den Ansprüchen 1 bis 3 verwendet.

7. Verfahren nach Anspruch 6, dadurch gekennzeichnet, daß man die Glanzpigmente während oder nach der Applikation im noch flüssigen Anwendungsmedium einem Magnetfeld aussetzt.

8. Verfahren nach Anspruch 6 oder 7, dadurch gekennzeichnet, daß man es im Sicherheitsdruck zur Erzeugung von 3D-Effekten anwendet.


## Claims

1. Magnetizable luster pigments comprising plateletlike, nonferromagnetic, metallic substrates coated with

   A) a first, ferromagnetic layer comprising $\gamma$-$Fe_2O_3$, and if desired

   B1) a further, nonferromagnetic layer, this time comprising a metal oxide, and/or

   B2) an outer, passivating, phosphate-, chromate- and/or vanadate-containing layer.

2. Luster pigments as claimed in claim 1, wherein the nonferromagnetic, metallic substrate consists essentially of aluminum.

3. Magnetizable luster pigment mixtures comprising

   I) the luster pigments of claim 1 or 2, and

   II) silicatic platelets coated with a ferromagnetic, $\gamma$-$Fe_2O_3$-containing layer and if desired an additional metal oxide layer and/or an outer, passivating, phosphate-, chromate- and/or vanadate-containing layer with or without a first layer of metal oxide underneath,

   as essential components.

4. A process for preparing the luster pigments of claim 1 or 2, which comprises coating the metallic substrate in a fluidized bed

   a1) initially with a layer consisting essentially of magnetite, by gas phase decomposition of iron carbonyl in the presence of water vapor and/or oxygen, and then converting this layer by heating in an oxidizing atmosphere into a ferromagnetic $\gamma$-$Fe_2O_3$-containing layer, or

   a2) initially with a layer consisting essentially of $\alpha$-$Fe_2O_3$, by gas phase decomposition of iron carbonyl in the presence of oxygen and/or water vapor, converting this layer by heating in a reducing atmosphere into an iron (II)-containing layer, and then converting the reduced layer by heating in an oxidizing atmosphere into a ferromagnetic, $\gamma$-$Fe_2O_3$-containing layer, and if desired

   b1) subsequently with a further layer, this time of a nonferromagnetic metal oxide, by gas phase decomposition of volatile metal compounds in the presence of oxygen and/or water vapor, and/or

   b2) with an additional, passivating, phosphate-, chromate- and/or vanadate-containing layer, by gas phase decomposition of vaporizable phosphorus, chromium and/or vanadium compounds in the presence of water vapor.

5. A process for preparing the luster pigment mixtures of claim 3, which comprises coating the metallic substrate and the uncoated or already metal oxide-coated silicatic platelets conjointly in a fluidized bed

a1) initially with a layer consisting essentially of magnetite, by gas phase decomposition of iron carbonyl in the presence of water vapor and/or oxygen, and then converting this layer by heating the pigment mixture in an oxidizing atmosphere into a ferromagnetic, $\gamma$-$Fe_2O_3$-containing layer, or

a2) initially with a layer consisting essentially of $\alpha$-$Fe_2O_3$, by gas phase decomposition of iron carbonyl in the presence of oxygen and/or water vapor, converting this layer by heating in a reducing atmosphere into an iron (II)-containing layer, and then converting the reduced layer by heating in an oxidizing atmosphere into a ferromagnetic, $\gamma$-$Fe_2O_3$-containing layer, and if desired

b1) subsequently with a further layer, this time of a nonferromagnetic metal oxide, by gas phase decomposition of volatile metal compounds in the presence of oxygen and/or water vapor, and/or

b2) with an additional, passivating, phosphate-, chromate- and/or vanadate-containing layer, by gas phase decomposition of vaporizable phosphorus, -chromium and/or vanadium compounds in the presence of water vapor.

6. A method of coloring paints, printing inks, plastics, glasses, ceramic products and decorative cosmetic preparations, which comprises using the luster pigments of claims 1 to 3.

7. A method as claimed in claim 6 additionally comprising exposing the luster pigments in the still liquid application medium to a magnetic field during or after application.

8. A method as claimed in claim 6 or 7 for producing 3D effects in security printing.

**Revendications**

1. Pigments brillants magnétisables à base de substrats métalliques, non-ferromagnétiques, lamellaires, revêtus, avec

A) une première couche ferromagnétique qui contient du $\gamma$-$Fe_2O_3$ et éventuellement
B1) une autre couche non-ferromagnétique contenant un oxyde métallique et/ou
B2) une couche extérieure passivante contenant du phosphate, du chromate et/ou du vanadate.

2. Pigments brillants selon la revendication 1, dans lesquels le substrat métallique, non-ferromagnétique, est constitué pour l'essentiel d'aluminium.

3. Mélanges de pigments brillants magnétisables à base

I) de pigments brillants selon la revendication 1 ou 2 et
II) de lamelles en silicate recouvertes avec une couche ferromagnétique contenant du $\gamma$-$Fe_2O_3$ et éventuellement une couche d'oxyde métallique supplémentaire et/ou une couche extérieure passivante contenant du phosphate, du chromate et/ou du vanadate, qui peuvent déjà être recouvertes avec un oxyde métallique dans une première couche,

en tant que composants essentiels.

4. Procédé de fabrication de pigments brillants selon l'une des revendications 1 et 2, caractérisé en ce que l'on recouvre tout d'abord le substrat métallique en lit fluidisé

a1) avec une couche contenant essentiellement de la magnétite, par dissociation en phase gaz de carbonyle-fer en présence de vapeur d'eau et/ou d'oxygène, et l'on transforme ensuite cette couche en une couche ferromagnétique contenant du $\gamma$-$Fe_2O_3$, par chauffage dans une atmosphère oxydante ou bien

a2) avec une couche contenant essentiellement du $\alpha$-Fe$_2$O$_3$, par dissociation en phase gaz de carbonyle-fer en présence d'oxygène et/ou de vapeur d'eau, et l'on,transforme cette couche en une couche contenant du fer(II), par chauffage dans une atmosphère réductrice et l'on transforme ensuite la couche réduite en une couche ferromagnétique contenant du $\gamma$-Fe$_2$O$_3$, par chauffage dans une atmosphère oxydante et éventuellement

b1) avec une autre couche en oxyde métallique non-ferromagnétique, par dissociation en phase gaz de composés métalliques volatils en présence d'oxygène et/ou de vapeur d'eau, et/ou

b2) avec une couche supplémentaire, passivante, contenant du phosphate, du chromate et/ou du vanadate, par dissociation en phase gaz de composés vaporisables du phosphore, du chrome et/ou du vanadium en présence de vapeur d'eau.

5. Procédé de fabrication de mélanges de pigments brillants selon la revendication 3, caractérisé en ce que l'on recouvre ensemble, en lit fluidisé, le substrat métallique et les lamelles en silicate non revêtues ou déjà revêtues d'oxyde métallique

   a1) avec une couche contenant essentiellement de la magnétite, par dissociation en phase gaz de carbonyle-fer en présence de vapeur d'eau et/ou d'oxygène, et l'on transforme ensuite cette couche en une couche ferromagnétique contenant du $\gamma$-Fe$_2$O$_3$, par chauffage du mélange de pigments dans une atmosphère oxydante ou bien

   a2) avec une couche contenant essentiellement du $\alpha$-Fe$_2$O$_3$, par dissociation en phase gaz de carbonyle-fer en présence d'oxygène et/ou de vapeur d'eau, et l'on transforme cette couche en une couche contenant du fer(II), par chauffage dans une atmosphère réductrice et l'on transforme ensuite la couche réduite en une couche ferromagnétique contenant du $\gamma$-Fe$_2$O$_3$, par chauffage dans une atmosphère oxydante et éventuellement

   b1) avec une autre couche en oxyde métallique non-ferromagnétique, par dissociation en phase gaz de composés métalliques volatils en présence d'oxygène et/ou de vapeur d'eau, et/ou

   b2) avec une couche supplémentaire, passivante, contenant du phosphate, du chromate et/ou du vanadate, par dissociation en phase gaz de composés vaporisables du phosphore, du chrome et/ou du vanadium en présence de vapeur d'eau.

6. Procédé de coloration de laques, d'encres d'imprimerie, de matières plastiques, de verres, de produits céramiques et de préparations pour la cosmétique décorative, caractérisé en ce que l'on utilise pour cela les pigments brillants selon l'une des revendications 1 à 3.

7. Procédé selon la revendication 6, caractérisé en ce que l'on expose les pigments brillants à un champ magnétique pendant ou après l'application dans le milieu d'utilisation encore liquide.

8. Procédé selon l'une des revendications 6 et 7, caractérisé en ce qu'on l'utilise pour l'obtention d'effets en 3D pour une impression de sécurité.